# FASCICULE DE BREVET EUROPEEN

(11) **EP 4 078 857 B1**
(45) Date de publication et mention de la délivrance du brevet: **04.06.2025**
(21) Numéro de dépôt: 20824291.7
(22) Date de dépôt: 18.12.2020
(51) Int. Cl.: H04B 10/80, H04B 10/114

(54) **ENSEMBLE STRUCTURE D'ACCUEIL-MODULE À INTERFACE(S) OPTIQUE(S)**
ANORDNUNG AUS EMPFÄNGERSTRUKTUR/OPTISCHEM SCHNITTSTELLENMODUL
RECEIVING STRUCTURE/OPTICAL INTERFACE MODULE ASSEMBLY

(30) Priorité: 19.12.2019 FR 1914816; 11.03.2020 FR 2002417
(43) Date de publication de la demande: 26.10.2022
(73) Titulaire: LATELEC, 31500 Toulouse (FR)
(72) Inventeur: DELAME-QUENTIN, Cyrille, 31460 TOUTENS (FR)
(74) Mandataire: Ipside
(86) Numéro de dépôt international: PCT/EP2020/087050
(87) Numéro de publication internationale: WO 2021/123188

(56) Documents cités:
- EP-A2- 0 348 329
- EP-A2- 0 463 390
- US-A1- 2008 107 373
- US-A1- 2010 028 018
- US-A1- 2016 234 581
- MOSS C J: "Optical interconnect for modular avionics", 19940101, 1 January 1994 (1994-01-01), pages 6/1 - 6/5, XP006527733
- STEVENS R C ET AL: "Optical communication for advanced avionics systems", DIGITAL AVIONICS SYSTEMS CONFERENCE, 1997. 16TH DASC., AIAA/IEEE IRVINE, CA, USA 26-30 OCT. 1997, NEW YORK, NY, USA,IEEE, US, vol. 1, 26 October 1997 (1997-10-26), pages 3.3 - 12, XP010256035, ISBN: 978-0-7803-4150-0, DOI: 10.1109/DASC.1997.635054

## Description

### Domaine technique de l'invention

L'invention concerne un ensemble comportant une structure d'accueil et un module. L'invention est notamment destinée à une application dans le domaine aéronautique, civile ou militaire. Elle s'applique plus particulièrement, bien que non limitativement, aux meubles d'aéronef.

### Technique antérieure

Les aéronefs actuels, qu'ils soient civils ou militaires, comportent généralement une baie avionique, constituée de plusieurs structures d'accueils, communément appelées meubles avioniques, et destinée à connecter des équipements électroniques ou optiques répartis dans l'aéronef, via des câblages. Chaque structure d'accueil 10 se présente classiquement sous la forme d'un bâti équipé de logements de réception de modules 20, principalement électroniques. Ces modules intègrent par exemple des cartes et des composants électroniques pour le contrôle et la gestion électronique/électrique des équipements de l'aéronef.

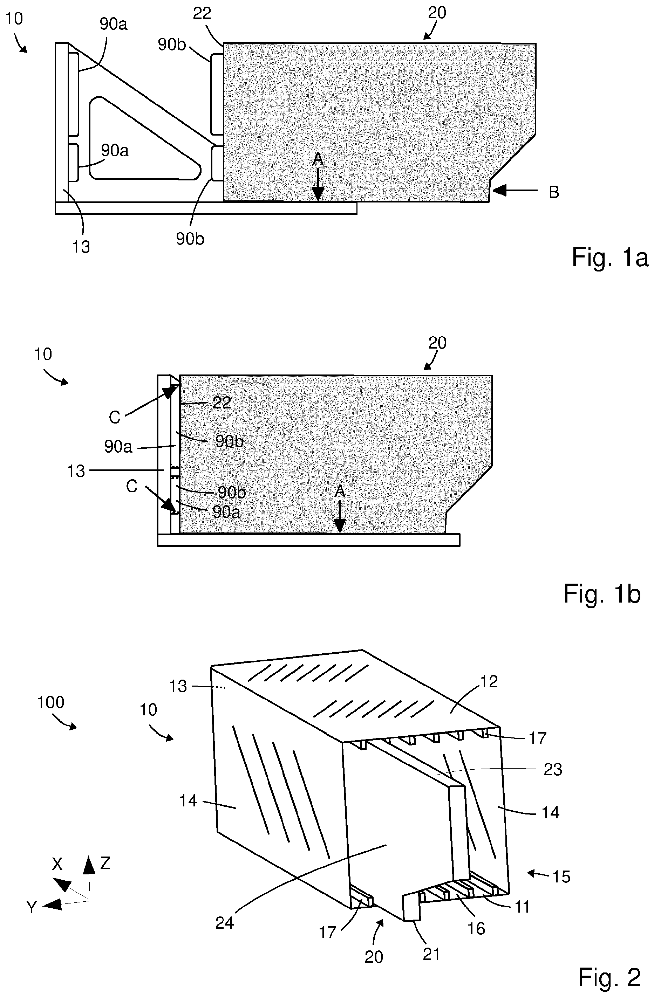

Chaque module 20 est amovible dans la structure d'accueil 10 et est équipé, comme illustré sur les figures 1a et 1b, au niveau d'une face, dite face arrière 22, d'un ensemble de connecteurs 90b, à contacts électriques ou optiques. Chaque connecteur 90b est destiné à venir se connecter ou se déconnecter à un connecteur 90a complémentaire disposé au niveau d'une paroi de fond de la structure d'accueil 10, paroi de fond communément appelée fond de panier 13.

Ces connecteurs 90a, 90b, à contacts électriques ou optiques, peuvent être par exemple des connecteurs de type ARINC.

Ces connecteurs permettent avantageusement de réaliser la continuité de transmission des signaux entre modules ou entre modules et équipements.

La connexion entre les connecteurs 90a de la structure d'accueil 10 et les connecteurs 90b complémentaires d'un module 20 est réalisée lors de l'insertion dudit module dans la structure d'accueil, par coulissement. Le module est guidé de manière classique dans un des logements (non représenté) de la structure d'accueil, par coulissement sur une surface de contact, jusqu'à ce que les connecteurs complémentaires s'accouplent. La figure 1a illustre l'insertion d'un module 20 dans la structure d'accueil 10. La surface de contact est représentée par la flèche A. La direction d'insertion du module est illustrée par la flèche B. La figure 1b illustre quant à elle le positionnement du module 20, une fois connecté à la structure d'accueil 10.

Les contraintes mécaniques imposés par l'alignement des connecteurs disposés sur la structure d'accueil et ceux disposés sur le module rendent l'ensemble hyperstatique. Les jeux imposés, notamment les jeux entre la surface de contact et les surfaces fonctionnelles de chaque connecteur (surfaces illustrées sur la figure 1b par les flèches C) doivent donc être très faibles, ce qui a pour conséquence de générer de fortes contraintes industrielles de fabrication des connecteurs du fond de panier de la structure d'accueil et du module. De telles contraintes rendent ces composants coûteux, complexes à fabriquer et représentent un poids non négligeable.

Par ailleurs, l'augmentation des jeux, même minimes (due par exemple à de faibles déformations mécaniques, des dilatations thermiques...), entre la surface de contact et les surfaces fonctionnelles de chaque connecteur peuvent conduire, lors de l'insertion d'un module dans la structure d'accueil, à un risque de pliage des contacts électriques dans les connecteurs ou de désalignement des surfaces des contacts optiques.

De même, lorsqu'un module n'est pas inséré parfaitement dans la structure d'accueil, le même risque d'endommagement ou de désalignement des contacts des connecteurs existe. Les systèmes d'insertion des modules dans la structure d'accueil nécessitent en conséquence une précision importante de fabrication et d'assemblage afin de respecter les contraintes d'approche et de connexion entre connecteurs.

Le document de l'état de l'art US2016/234581 décrit un meuble avionique comportant des modules de communication, ces modules possédant des unités de réception et d'émission optique en espace libre pour communiquer entre modules. Par ailleurs, les publications scientifiques MOSS C J: "Optical interconnect for modular avionics", STEVENS R C ET AL: "Optical communication for advanced avionics systems", décrivent des exemples de meubles avioniques disposant de connecteurs de fibre optique au niveau des modules de communication et de la structure d'accueil. Finalement, le document EP0463390 décrit un connecteur électro-optique pour un bus de données disposant de deux sous-ensembles optiques constitués de réseaux optiques communicant en espace-libre quand ils sont branchés l'un à l'autre.

### Présentation de l'invention

La présente invention vise à remédier aux inconvénients précités.

Notamment, la présente invention permet de s'affranchir de tout contact physique entre la structure d'accueil et le(s) module(s) tout en garantissant la continuité de transmission des signaux entre modules ou entre modules et équipements.

A cet effet, il est proposé par la présente invention un ensemble comportant un module et un meuble avionique comme structure d'accueil comportant une pluralité de logements, ledit module étant destiné à s'insérer dans un logement de la structure d'accueil selon un axe longitudinal X et à y être maintenu fixement de manière réversible dans une position dite opérante.

Le module comporte une première face destinée à être en vis-à-vis d'une première paroi de la structure d'accueil. Pour chaque logement, la première paroi de la structure d'accueil comporte un premier réseau optique comportant des premières unités d'émission optique et des premières unités de réception optique. La première face du module comporte un deuxième réseau optique comportant des deuxièmes unités d'émission optique et des deuxièmes unités de réception optique. Lorsque le module est en position opérante dans la structure d'accueil, le premier réseau optique et le deuxième réseau optique sont distants l'un de l'autre d'une distance (d) prédéfinie et :
- chaque deuxième unité d'émission optique de la première face du module est disposée en vis-à-vis d'une première unité de réception optique de la première paroi de la structure d'accueil,
- chaque deuxième unité de réception optique de la première face du module est disposée en vis-à-vis d'une première unité d'émission optique de la première paroi de la structure d'accueil.

Chaque première/deuxième unité d'émission optique est configurée pour émettre un faisceau optique de longueur d'onde donnée. Chaque deuxième unité d'émission optique est configurée pour émettre un faisceau optique de longueur d'onde donnée, de préférence distincte de celle du faisceau optique émis par la première/deuxième unité d'émission optique.

Un tel ensemble, de par l'utilisation des premier et deuxième réseaux optiques et de par leur agencement, permet la création d'une interface optique entre la structure d'accueil et un module. Ladite interface optique est constituée d'une pluralité de liaisons optiques, une liaison optique étant établie entre une première unité d'émission optique et une deuxième unité de réception optique ou une deuxième unité d'émission optique et une première unité de réception optique.

La présente invention permet avantageusement de s'affranchir des contraintes mécaniques d'enfichage des connecteurs complémentaires entre une structure d'accueil et un module de l'art antérieur en remplaçant lesdits connecteurs par deux réseaux optiques complémentaires venant en vis-à-vis l'un de l'autre, un premier réseau disposé au niveau d'une première paroi de la structure d'accueil et un deuxième réseau disposé au niveau d'une première face du module.

La première paroi de la structure d'accueil peut avantageusement être toute paroi formant la structure d'accueil. Ainsi, la première paroi peut être une paroi inférieure, une paroi supérieure, une paroi latérale ou une paroi de fond, dite fond de panier. De même, la première face du module peut être toute face formant le module. Ainsi, la première face peut être une face inférieure, une face supérieure, une face latérale ou une face arrière. La première face du module est la face destinée à être en vis-à-vis de la première paroi de la structure d'accueil, lorsque le module est en position opérante.

Ainsi, l'ensemble n'est plus contraint par l'utilisation d'une seule interface, celle entre le fond de panier de la structure d'accueil et la face arrière du module, comme pour les ensembles existants. Il est ainsi possible d'avoir une pluralité d'interfaces optiques, avec une interface optique créée par exemple au niveau de chaque paroi de la structure d'accueil et de la face associée du module, lorsque le module est en position opérante.

La communication se fait à présent sans contact, via des faisceaux optiques, et non plus via un contact physique entre deux connecteurs complémentaires. La propagation des faisceaux optiques se fait avantageusement en espace libre.

La suppression de connecteurs complexes permet avantageusement de s'affranchir des problèmes de complexité d'installation et de poids de ces connecteurs. L'invention permet au final une réduction de la masse de l'ensemble structure d'accueil-modules.

Les liaisons optiques autorisant un léger désaxage des axes optiques des faisceaux optiques émis, l'invention permet de s'affranchir des contraintes liées à la précision des jeux de montage entre la structure d'accueil et un module.

L'invention permet également une augmentation des débits de liaison.

De par la suppression des connecteurs, l'invention permet une immunité à tout type de rayonnement électromagnétique sur la liaison, à tout couplage électromagnétique de connecteurs entre eux, à tout effet électrique entre des connecteurs (arc, fuite...) et à toute contamination des connecteurs (fuite, air salin...).

Dans des modes particuliers de réalisation, l'invention répond en outre aux caractéristiques suivantes, mises en œuvre séparément ou en chacune de leurs combinaisons techniquement opérantes.

Dans des modes particuliers de réalisation de l'invention, une première unité d'émission optique et/ou une deuxième unité d'émission optique comporte une source lumineuse, par exemple de type diode laser ou diode électroluminescente. Dans une variante de réalisation, une première unité d'émission optique et/ou une deuxième unité d'émission optique consiste en une source lumineuse. Dans des modes particuliers de réalisation de l'invention, une première unité de réception optique et/ou une deuxième unité de réception optique comporte un photodétecteur, par exemple de type photodiode.

Dans une variante de réalisation, une première unité de réception optique et/ou une deuxième unité de réception optique consiste un photodétecteur.

Dans des formes particulières de réalisation de l'invention, le premier réseau optique se présente sous la forme d'une barrette comportant une alternance de lignes ou de colonnes de sources lumineuses et de photodétecteurs.

Dans des formes particulières de réalisation de l'invention, le deuxième réseau optique se présente sous la forme d'une barrette comportant une alternance de lignes ou de colonnes de sources lumineuses et de photodétecteurs.

Dans des modes particuliers de réalisation de l'invention, une première unité d'émission optique et/ou une deuxième unité d'émission optique et/ou une première unité de réception optique et/ou une deuxième unité de réception optique comporte une source lumineuse associée à une fibre optique. Une telle fibre optique permet le déport de la source lumineuse.

Dans une variante de réalisation, une première unité d'émission optique et/ou une deuxième unité d'émission optique et/ou une première unité de réception optique et/ou une deuxième unité de réception optique consiste en une source lumineuse associée à une fibre optique.

Dans des modes particuliers de réalisation de l'invention, une première unité de réception optique et/ou une deuxième unité de réception optique comporte un photodétecteur associé à une fibre optique. Une telle fibre optique permet le déport du photodétecteur.

Dans une variante de réalisation, une première unité de réception optique et/ou une deuxième unité de réception optique consiste en un photodétecteur associé à une fibre optique.

Dans des modes particuliers de réalisation de l'invention, pour s'affranchir de dépôt de poussière sur les composants optiques, le premier réseau optique comporte un joint de protection disposé autour de chaque première unité d'émission optique et première unité de réception optique. De même, le deuxième réseau optique comporte un joint de protection disposé autour de chaque deuxième unité d'émission optique et deuxième unité de réception optique. Lorsque le module est en position opérante dans la structure d'accueil, chaque joint de protection situé au niveau du premier réseau optique est configuré pour s'ouvrir au contact d'un joint de protection situé au niveau du deuxième réseau optique.

L'invention est également relative à une structure d'accueil pour un ensemble tel qu'exposé et conforme à au moins l'un de ses modes de réalisation.

Selon un autre aspect, l'invention vise également un module pour un ensemble tel qu'exposé et conforme à au moins l'un de ses modes de réalisation.

Selon encore un autre aspect, la présente invention vise un aéronef comportant un ensemble tel qu'exposé et conforme à au moins l'un de ses modes de réalisation, ledit ensemble étant destiné être intégré dans une baie avionique dudit aéronef.

### Brève description des figures

L'invention sera mieux comprise à la lecture de la description suivante, donnée à titre d'exemple nullement limitatif, et faite en se référant aux figures suivantes :
La figure 1a illustre l'insertion d'un module dans une structure d'accueil selon l'art antérieur ;
La figure 1b illustre le module inséré de la figure 1a, et connecté à la structure d'accueil, selon l'art antérieur ;
La figure 2 représente illustre une vue en perspective d'un ensemble comprenant une structure d'accueil et un module en cours d'insertion, dans un repère XYZ ;
La figure 3 représente un module, dans une position opérante, c'est-à-dire une fois inséré et verrouillé dans la structure d'accueil, selon l'invention, dans le plan XZ ;
La figure 4 représente une vue simplifiée d'une interface optique de l'ensemble, lorsque le module est en position opérante, entre une paroi de fond de la structure d'accueil et une face arrière du module,
La figure 5 représente une vue simplifiée de l'interface optique de la figure 4, lorsque le module est désaxé selon l'axe vertical, entre la paroi de fond de la structure d'accueil et la face arrière du module,
La figure 6 représente une vue simplifiée d'une interface optique de la figure 4, lorsque le module est en position opérante, et illustrant la réduction de la divergence des faisceaux optiques, entre la paroi de fond de la structure d'accueil et la face arrière du module,
La figure 7 représente une vue simplifiée de l'interface optique de la figure 4, illustrant un exemple de réalisation des première et deuxième réseaux optiques, entre la paroi de fond de la structure d'accueil et la face arrière du module,
La figure 8 représente une vue simplifiée de l'interface optique de la figure 4, illustrant un autre exemple de réalisation des première et deuxième réseaux optiques, entre la paroi de fond de la structure d'accueil et la face arrière du module,
La figure 9 représente une vue simplifiée de l'interface optique de la figure 4, illustrant le positionnement de joints de protection, entre la paroi de fond de la structure d'accueil et la face arrière du module,
La figure 10 représente une vue simplifiée d'une interface optique de l'ensemble, lorsque le module est en position opérante, entre une paroi inférieure de la structure d'accueil et une face inférieure du module,
La figure 11 représente une vue simplifiée de l'interface optique de la figure 10, lorsque le module est désaxé selon l'axe horizontal, entre la paroi inférieure de la structure d'accueil et la face inférieure du module.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

La présente invention concerne un ensemble 100 comportant une structure d'accueil 10 et au moins un module 20, préférentiellement un module électronique. Ledit au moins un module 20 est destiné à venir s'insérer dans la structure d'accueil 10 et à y être maintenu fixement de manière réversible.

L'invention est décrite dans le contexte particulier d'un de ses domaines d'application préférés dans lequel l'ensemble 100 est destiné à être installé dans un aéronef. Ledit ensemble est préférentiellement destiné à être intégré dans une baie avionique d'un aéronef.

Rien n'exclut cependant de disposer l'ensemble dans tout autre type de véhicules ou encore dans des bâtiments de type bâtiments d'entreprise.

La structure d'accueil 10, autrement appelée meuble avionique dans le domaine aéronautique, se présente, de manière connue et comme illustrée figure 2, sous la forme d'un bâti comportant une paroi inférieure 11, une paroi supérieure 12, une paroi de fond 13. Le bâti est ouvert au niveau d'une face, dite avant 15, opposée à la paroi de fond 13, et peut comporter deux parois latérales 14. La paroi de fond 13 est communément dénommée fond de panier. Le fond de panier 13 est généralement destiné, dans les structures d'accueil classiques, à coopérer avec un câblage aéronautique (non représenté sur les figures) amenant à la structure d'accueil 10 une distribution de signaux électriques provenant de l'aéronef.

Dans la suite de la description, on associera à la structure d'accueil 10, un repère comportant trois axes XYZ orthogonaux entre eux. Ce repère se définit par rapport à une position relative de la structure d'accueil 10 dans des conditions d'utilisation standard, notamment lorsque la structure d'accueil est par exemple posée sur un plancher de l'aéronef.

Ledit repère comporte :
- Un axe X, dit axe longitudinal, correspondant à un axe d'insertion du module dans la structure d'accueil, et orienté suivant une direction d'insertion du module 20 dans la structure d'accueil 10,
- Un axe Y, dit axe transversal, perpendiculaire à l'axe longitudinal, et orienté suivant une direction horizontale lorsque le plancher de l'aéronef sur lequel est posée la structure d'accueil est horizontal,
- Un axe Z, dit axe vertical, perpendiculaire à l'axe longitudinal et à l'axe transversal, et orienté suivant une direction verticale lorsque le plancher de l'aéronef sur lequel est posée la structure d'accueil est horizontal.

Ainsi, les termes « longitudinal », « latéral », « avant », « arrière », « haut », « bas », « supérieur » et « inférieur », et leurs dérivés ou équivalents, sont définis par rapport aux différents axes de ce repère.

La structure d'accueil 10 comporte plusieurs logements 16, chaque logement 16 étant destiné à recevoir un module 20. Lorsque la structure d'accueil 10 comporte plusieurs logements 16, les logements sont alignés les uns à côté des autres, selon l'axe transversal Y, et séparés par exemple par des glissières 17 s'étendant, selon l'axe longitudinal, le long de la paroi inférieure 11 et de la paroi supérieure 12.

La structure d'accueil 10 selon l'invention est destinée à créer, via au moins une de ses parois, une liaison entre des modules 20 entre eux et/ou avec des équipements répartis dans l'aéronef.

Chaque module 20 se présente sous la forme d'un boîtier, par exemple parallélépipédique. Chaque module 20 présente des dimensions adaptées en longueur, largeur et épaisseur pour s'insérer verticalement, à un jeu près, dans un logement 16.

Chaque module 20 s'insère dans un logement 16 de la structure d'accueil 10 par coulissement dudit module selon l'axe longitudinal, c'est-à-dire depuis la face avant 15 de ladite structure d'accueil 10 vers le fond de panier 13.

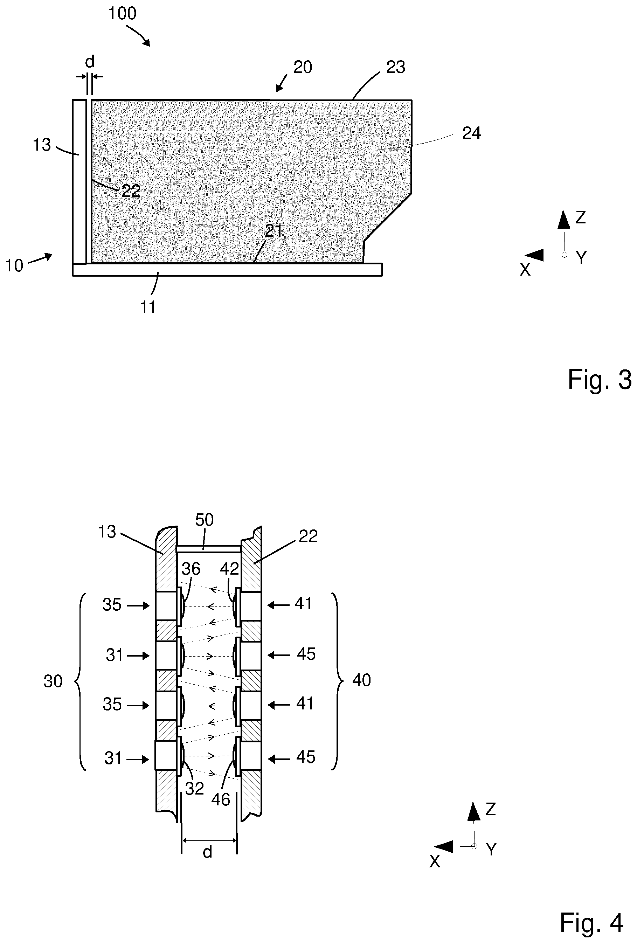

Un module 20 est inséré dans la structure d'accueil 10 jusqu'à une position dite opérante, dans laquelle ledit module est en place dans la structure d'accueil 10 et verrouillé, de manière réversible, dans son logement 16. Le module 20 présente alors une face, dite inférieure 21, en contact avec la paroi inférieure 11 de la structure d'accueil 10. Le module 20 présente une face, dite arrière 22, en vis-à-vis du fond de panier 13 de la structure d'accueil 10, comme illustré sur la figure 3. Le module 20 peut présenter une face, dite latérale 24, en vis-à-vis d'une des parois latérales 14 de la structure d'accueil 10. De même, le module peut présenter une face, dite supérieure 23, en vis-à-vis de la paroi supérieure 12 de la structure d'accueil 10.

Dans un exemple de réalisation (non représenté), pour verrouiller ou déverrouiller un module 20 dans son logement 16 de la structure d'accueil 10, ledit module comporte un dispositif de verrouillage/déverrouillage amovible. De manière classique, un dispositif de verrouillage peut comporter un levier sur le boîtier du module.

Chaque module 20 comporte par exemple une ou des cartes comportant un circuit imprimé. Chaque module 20 présente une forme sensiblement identique, qui s'insère indifféremment dans n'importe quel logement. Un module se diffère d'un autre seulement au niveau de la carte comportant tous les composants électroniques nécessaires pour réaliser une fonction électronique de ladite carte. Ainsi, à un module est généralement associée une fonction, par exemple, une fonction d'alimentation, d'entrée/sortie ou encore de processeur.

Selon l'invention, la structure d'accueil 10 comporte, au moins au niveau d'une première paroi, un réseau de premières unités d'émission optique 31 et de premières unités de réception optique 35. Ce réseau sera dénommé par la suite premier réseau optique 30.

Chaque module 20 comporte, au moins au niveau d'une première face, un réseau de deuxièmes unités d'émission optique 41 et de deuxièmes unités de réception optique 45. Ce réseau sera dénommé par la suite deuxième réseau optique 40. Dans la suite de la description, on utilisera le terme « première paroi » pour désigner l'une des parois de la structure d'accueil 10, que ce soit la paroi supérieure, la paroi inférieure, le fond de panier ou la paroi latérale.

On utilisera le terme « première face » pour désigner l'une des faces du module 20, celle qui est destinée à venir en vis-à-vis de la première paroi de la structure d'accueil. Ainsi, en d'autres termes, lorsque la première paroi de la structure d'accueil 10 est la paroi supérieure 12, la première face du module est la face supérieure 23. Lorsque la première paroi de la structure d'accueil 10 est la paroi inférieure 11, la première face du module est la face inférieure 21. Lorsque la première paroi de la structure d'accueil 10 est le fond de panier 13, la première face du module est la face arrière 22. Lorsque la première paroi de la structure d'accueil 10 est une paroi latérale 14, la première face du module est la face latérale 24 en vis-à-vis de ladite paroi latérale.

De préférence, lorsque la première paroi recevant le premier réseau optique 30 est le fond de panier 13, la structure d'accueil comporte, en regard de chaque logement 16, un premier réseau optique 30.

Le premier réseau optique 30 et le deuxième réseau optique 40 d'un ensemble 100 sont positionnés respectivement sur une première paroi de la structure d'accueil 10 et sur une première face du module 20 de telle sorte que, lorsque ledit module 20 est en position opérante dans la structure d'accueil 10, le premier réseau optique 30 se retrouve en coïncidence avec le deuxième réseau optique 40.

Les figures 4 à 9 illustrent, de manière non limitative, un premier réseau optique 30 au niveau du fond de panier 13 de la structure d'accueil 10 et un deuxième réseau optique 40 au niveau de la face arrière 22 du module 20.

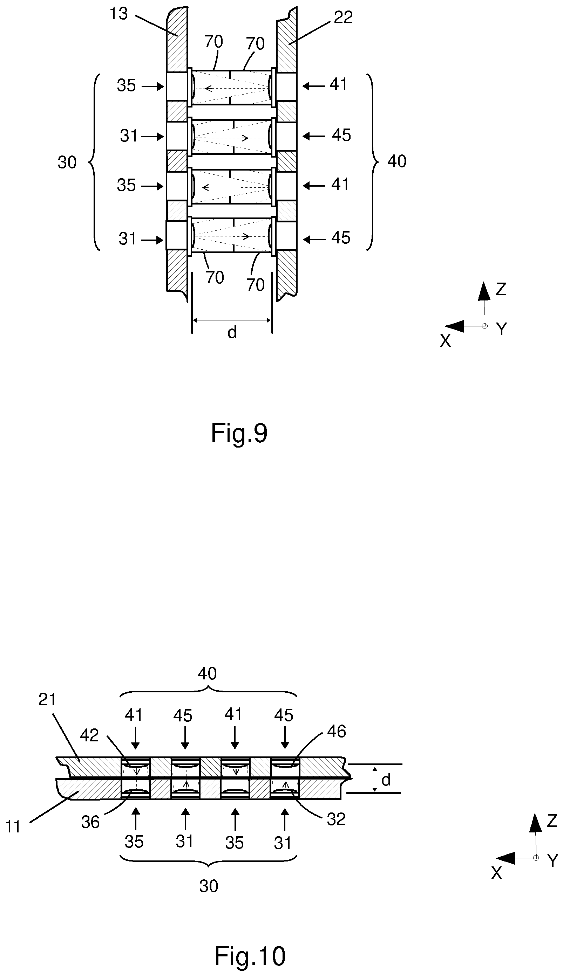

La figure 10 illustre, de manière non limitative, un premier réseau optique 30 au niveau de la paroi inférieure 11 de la structure d'accueil 10 et un deuxième réseau optique 40 au niveau de la face inférieure 21 du module 20.

Lorsque ledit module est en position opérante dans la structure d'accueil 10, le deuxième réseau optique 40, disposé au niveau de la première face du module 20, et le premier réseau optique 30, disposé au niveau de la première paroi de la structure d'accueil 10, sont distants l'un de l'autre d'une distance d prédéfinie.

Le premier réseau optique 30 et le deuxième réseau optique 40 sont agencés respectivement au niveau de la première paroi de la structure d'accueil 10 et au niveau de la première face d'un module 20 de telle sorte que, lorsque ledit module est en position opérante dans la structure d'accueil :
- chaque deuxième unité d'émission optique 41 de la première face du module 20 est disposée en vis-à-vis d'une première unité de réception optique 35 de la première paroi de la structure d'accueil 10,
- chaque deuxième unité de réception optique 45 de la première face du module 20 est disposée en vis-à-vis d'une première unité d'émission optique 31 de la première paroi de la structure d'accueil 10.

Chaque première unité d'émission optique 31 est configurée pour émettre un faisceau optique de longueur d'onde donnée λ₁. Dans un exemple de réalisation, lorsque le premier réseau optique 30 est positionné au niveau du fond de panier 13, ledit faisceau optique présente de préférence un axe optique selon l'axe longitudinal. Lorsque le module 20 est en position opérante dans la structure d'accueil 10, le faisceau optique de la première unité d'émission optique 31 est émis en direction d'une deuxième unité de réception optique 45 du deuxième réseau optique 40.

Chaque deuxième unité d'émission optique 41 est configurée pour émettre un faisceau optique de longueur d'onde donnée λ₂. Dans un exemple de réalisation, lorsque le deuxième réseau optique 40 est positionné au niveau de la face arrière 22, ledit faisceau optique présente de préférence un axe optique selon l'axe longitudinal. Lorsque le module 20 est en position opérante dans la structure d'accueil 10, le faisceau optique de la deuxième unité d'émission optique 41 est émis en direction d'une première unité de réception optique 35 du premier réseau optique 30.

De préférence, les premières unités d'émission optique 31 et les deuxièmes unités d'émission optique 41 émettent un faisceau optique dans l'infrarouge.

De préférence, les longueurs d'onde λ₁ et λ₂ choisies sont différentes.

Chaque deuxième unité de réception optique 45 est configurée pour recevoir le faisceau optique émis par une première unité d'émission optique 31.

Chaque première unité de réception optique 35 est configurée pour recevoir un faisceau optique émis par une deuxième unité d'émission optique 41.

La distance d entre les premier et deuxième réseaux optiques 30, 40, lorsque le module 20 est en position opérante dans la structure d'accueil 10, est préférentiellement définie de sorte que le faisceau optique d'une première (respectivement deuxième 41) unité d'émission optique 31 n'illumine que la deuxième (respectivement première 35) unité de réception optique 45, sans illuminer les deuxièmes (respectivement premières 35) unités de réception optique 45 ou deuxièmes (respectivement premières 31) unités d'émission optique 41 environnantes. La distance d est préférentiellement définie en fonction notamment de la divergence des divers faisceaux optiques émis par les premières et deuxièmes unités d'émission optique 31, 41 et de l'écart (du pas) séparant, pour chaque réseau optique 30, 40, les unités de réception optique ou d'émission optique entre elles.

Dans un exemple de réalisation, la distance d est choisie de l'ordre de quelques millimètres à quelques centimètres, de préférence la distance d est comprise en 0,5 mm et 50 mm.

Dans un mode préféré de réalisation, lorsque le premier réseau optique 30 est positionné au niveau du fond de panier 13 et le deuxième réseau optique 40 est positionné au niveau de la face arrière 22, pour garantir la distance d souhaitée entre les premier et deuxième réseaux optiques 30, 40, la structure d'accueil 10, et/ou le module 20, comporte une butée 50 ou un épaulement.

Dans un exemple de ce mode préféré de réalisation, la butée 50 peut être positionnée sur le fond de panier 13 de la structure d'accueil 10, et s'étend, selon l'axe longitudinal, d'une longueur d, comme illustrée sur la figure 4.

Dans un autre exemple de réalisation (non représenté), la butée d'arrêt peut être positionnée sur la paroi inférieure 11 et/ou la paroi supérieure 12 de la structure d'accueil 10, placée à une distance d du fond de panier, selon l'axe longitudinal.

Dans un autre exemple de réalisation (non représenté), un épaulement peut être positionné sur une des faces du module 20 et qui est destiné à heurter au moins une des parois latérales, inférieure ou supérieure lors de l'insertion.

Grace aux premier et deuxième réseaux optiques 30, 40, et à leur agencement, une fois le module 20 en position opérante, l'invention permet la création, entre ladite structure d'accueil et ledit module, d'une interface optique constituée des multiples liaisons optiques. Une telle interface optique permet avantageusement de réaliser la continuité de transmission des signaux entre modules ou entre modules et équipements.

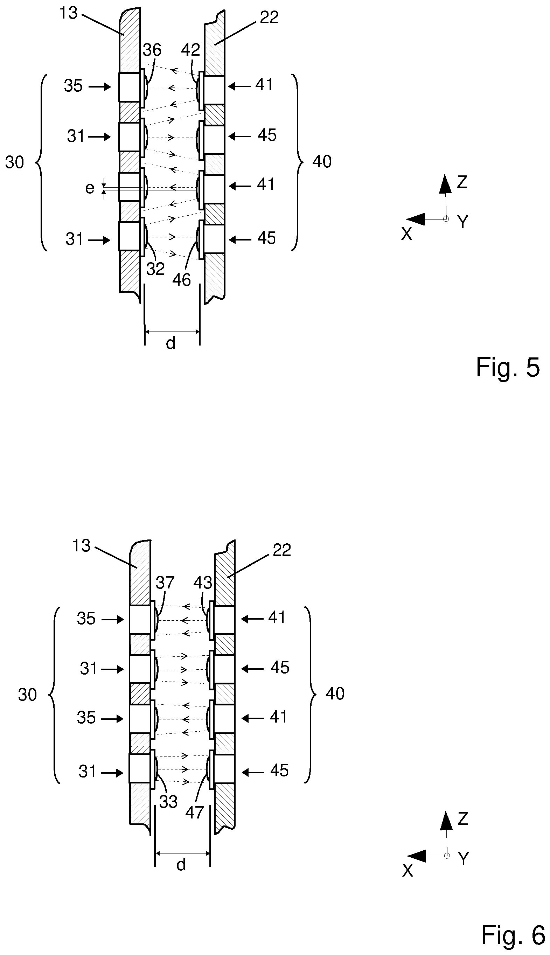

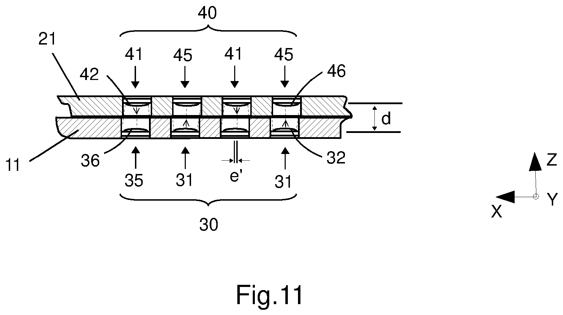

Une interface optique, au contraire d'une interface physique entre connecteurs comme existante dans l'art antérieur, est avantageuse car elle autorise un léger désaxage de l'axe optique du faisceau optique émis, autant selon l'axe transversal Y que selon l'axe vertical Z. La figure 5 illustre un désaxage e selon l'axe vertical, lorsque le premier réseau optique 30 est positionné au niveau du fond de panier 13 et le deuxième réseau optique 40 est positionné au niveau de la face arrière 22. La figure 11 illustre un désaxage e' selon l'axe horizontal, lorsque le premier réseau optique 30 est positionné au niveau de la paroi inférieure 11 et le deuxième réseau optique 40 est positionné au niveau de la face inférieure 21. Cela permet avantageusement de relâcher les contraintes mécaniques de fabrication du module et de la structure d'accueil, ainsi que les contraintes d'assemblage du module dans la structure d'accueil.

Des exemples non limitatifs de réalisation du premier réseau optique vont à présent être décrits. De tels exemples s'appliquent par analogie au deuxième réseau optique.

Le premier réseau optique 30 comporte une pluralité de premières unités d'émission optique 31 et de premières unités de réception optique 35.

De préférence, le premier réseau optique 30 comporte autant de premières unités d'émission optique 31 que de premières unités de réception optique 35.

De préférence, les premières unités d'émission optique 31 du premier réseau optique 30 sont identiques entre elles. De même, les premières unités de réception optique 35 sont préférentiellement identiques entre elles.

Dans un exemple de réalisation d'une première unité d'émission optique 31, comme illustré sur les figures 4 5, 10 ou 11, ladite première unité d'émission optique comporte une source lumineuse 32, par exemple de type diode laser ou diode électroluminescente (DEL).

Les figure 6 à 9 illustrent différentes variantes de réalisation, dans l'exemple non limitatif où le premier réseau optique 30 est positionné au niveau du fond de panier 13 de la structure d'accueil et le deuxième réseau optique 40 est positionné au niveau de la face arrière 22 du module 20. Il est clair que toute autre première paroi et première face en vis-à-vis de ladite première paroi peuvent être illustrées et décrites de manière analogue.

Dans une variante de réalisation, comme illustré de manière non limitative sur la figure 6, la première unité d'émission optique peut comporter une source lumineuse (non représentée) associée à une lentille 33, par exemple convergente. Une telle variante de réalisation permet avantageusement de réduire la divergence du faisceau optique émis par la source lumineuse. Ladite lentille est avantageusement disposée en sortie de ladite source lumineuse. De préférence, la lentille est accolée à la source lumineuse. Une telle lentille est agencée en vis-à-vis de la source lumineuse de sorte à soit faire converger le faisceau optique émis soit faire collimater le faisceau optique émis. Lorsqu'un module 20 est en position opérante dans la structure d'accueil, ladite lentille de la première unité d'émission optique 31 est en vis-à-vis de la deuxième unité de réception optique 45 du deuxième réseau optique 40.

Dans une autre variante de réalisation, la première unité d'émission optique 31 peut comporter une source lumineuse associée à une fibre optique 34. Une telle variante de réalisation permet avantageusement de déporter la source lumineuse. La fibre optique est avantageusement disposée en sortie de la source lumineuse et est configurée pour transporter le faisceau optique émis de longueur d'onde λ₁ de la source lumineuse. La fibre optique peut être monomode ou multimode. Lorsqu'un module 20 est en position opérante dans la structure d'accueil, une extrémité libre de la fibre optique, d'où émerge le faisceau optique émis, est en vis-à-vis de la deuxième unité de réception optique du deuxième réseau optique.

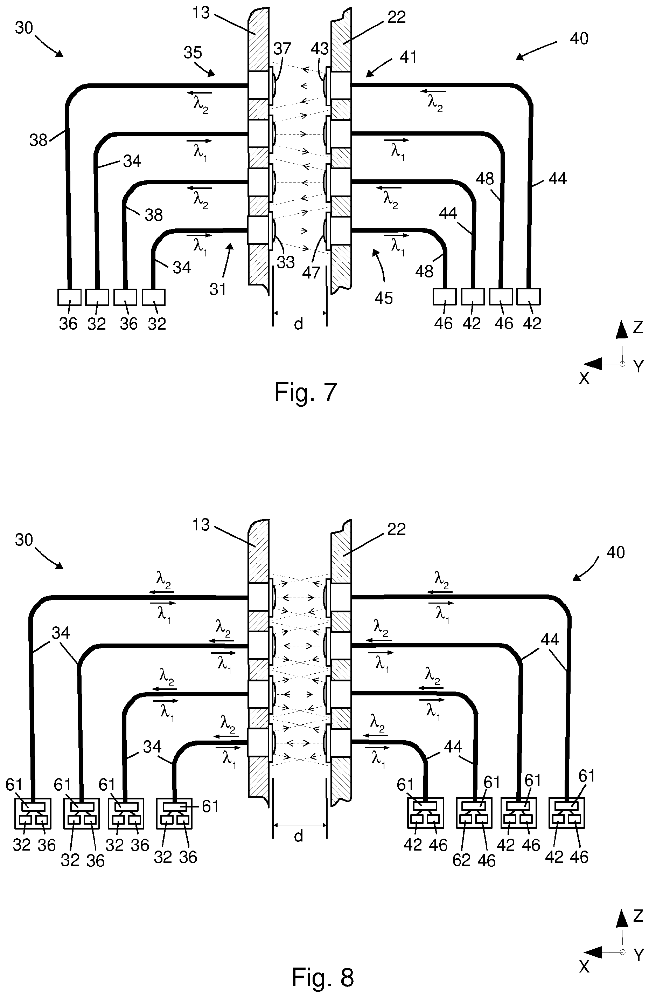

Dans une autre variante de réalisation, comme illustré de manière non limitative sur la figure 7, la première unité d'émission optique 31 peut comporter une source lumineuse associée à une fibre optique 34 et à une lentille 33, par exemple convergente. La fibre optique 34 est avantageusement disposée en sortie de la source lumineuse et est configurée pour transporter le faisceau optique émis de longueur d'onde λ₁ de la source lumineuse. La lentille 33 est agencée en sortie de l'extrémité libre de la fibre optique. Lorsqu'un module 20 est en position opérante dans la structure d'accueil, ladite lentille de la première unité d'émission optique 31 est en vis-à-vis de la deuxième unité de réception optique 45 du deuxième réseau optique 40.

Par analogie à la première unité d'émission optique 31, la deuxième unité d'émission optique 41 comporte les mêmes exemples et variantes de réalisations. La deuxième unité d'émission optique comporte ainsi une source lumineuse 42, éventuellement associée à une lentille 43 et/ou une fibre optique 44.

Dans un exemple de réalisation d'une première unité de réception optique 35, comme illustré sur les figures 4, 5, 10 ou 11, ladite première unité de réception optique comporte un photodétecteur 36, de type photodiode.

Dans une variante de réalisation, comme illustré de manière non limitative sur la figure 6, la première unité de réception optique 35 peut comporter un photodétecteur (non représenté) associé à une lentille 37. Ladite lentille est avantageusement disposée en amont du photodétecteur. Ladite lentille est agencée en vis-à-vis du photodétecteur de sorte qu'un faisceau optique émis dans sa direction converge vers le photodétecteur. Lorsqu'un module 20 est en position opérante dans la structure d'accueil 10, la lentille 37 de la première unité de réception optique 35 est en vis-à-vis de la deuxième unité d'émission optique 41 du deuxième réseau optique 40. Une telle variante de réalisation permet avantageusement, lorsque le module est en position opérante dans la structure d'accueil, de focaliser le faisceau optique émis par une deuxième unité d'émission optique 41 sur le photodétecteur de la première unité de réception optique 35.

Dans une variante de réalisation, la première unité de réception optique 35 peut comporter un photodétecteur 36 associé à une fibre optique 38. Une telle variante de réalisation permet avantageusement de déporter ledit photodétecteur. Lorsqu'un module 20 est en position opérante dans la structure d'accueil 10, une extrémité libre de la fibre optique 38 est en vis-à-vis de la deuxième unité d'émission optique 41 du deuxième réseau optique 40. La fibre optique 38 est configurée pour transporter un faisceau optique de longueur d'onde λ₂ émis par une deuxième unité d'émission optique 41 du deuxième réseau optique 40.

Dans une autre variante de réalisation, comme illustré de manière non limitative sur la figure 7, la première unité de réception optique 35 peut comporter un photodétecteur 36 associé à une fibre optique 38 et à une lentille 37. Lorsqu'un module 20 est en position opérante dans la structure d'accueil, ladite lentille de la première unité de réception optique 35 est en vis-à-vis de la deuxième unité d'émission optique 41 du deuxième réseau optique 40. La lentille 37 permet la focalisation du faisceau optique dans la fibre optique 38 qui transporte ensuite ledit faisceau optique vers le photodétecteur 36.

Par analogie à la première unité de réception optique, la deuxième unité de réception optique 45 comporte les mêmes exemples et variantes de réalisations. La deuxième unité de réception optique 45 comporte ainsi une photodiode 46, éventuellement associée à une lentille 47 et/ou une fibre optique 48.

De préférence, les premières unités d'émission optique 31 du premier réseau optique 30 et les deuxièmes unités d'émission optique 41 du deuxième réseau optique 40 sont identiques entre elles. De même, les premières unités de réception optique 35 du premier réseau optique 30 et les deuxièmes unités de réception optique 45 du deuxième réseau optique 40 sont identiques entre elles.

Dans un exemple de réalisation, lorsqu'une première unité d'émission optique 31 du premier réseau optique 30 consiste uniquement en une source lumineuse et la deuxième unité de réception optique 45 du deuxième réseau optique 40 associée consiste uniquement en un photorécepteur, aucune lentille n'est interposée sur le trajet optique entre ladite source lumineuse et ledit photorécepteur.

Dans un exemple de réalisation, lorsqu'une première unité d'émission optique 31 du premier réseau optique 30 consiste uniquement en une source lumineuse et la deuxième unité de réception optique 45 du deuxième réseau optique 40 associée consiste uniquement en un photorécepteur et une fibre optique, aucune lentille n'est interposée sur le trajet optique entre ladite source lumineuse et l'extrémité libre de la fibre optique associée audit photorécepteur.

Dans un autre exemple de réalisation, lorsqu'une première unité d'émission optique 31 du premier réseau optique 30 consiste en une source lumineuse et une fibre optique et la deuxième unité de réception optique 45 du deuxième réseau optique 40 associée consiste uniquement en un photorécepteur, aucune lentille n'est interposée sur le trajet optique entre l'extrémité libre de la fibre optique et ledit photorécepteur.

Dans un autre exemple de réalisation, lorsqu'une première unité d'émission optique 31 du premier réseau optique 30 consiste en une source lumineuse et une fibre optique et la deuxième unité de réception optique 45 du deuxième réseau optique 40 associée consiste uniquement en un photorécepteur et une fibre optique, aucune lentille n'est interposée sur le trajet optique entre l'extrémité libre de la fibre optique associée à ladite source lumineuse et l'extrémité libre de la fibre optique associée audit photorécepteur.

De manière préférentiel, en terme plus général, aucune lentille n'est interposée entre une première unité d'émission optique 31 du premier réseau optique 30 et une deuxième unité de réception optique 45 du deuxième réseau optique 40 associée.

Aucune lentille n'est interposée dans la distance d entre les premier et deuxième réseaux optiques 30, 40, lorsque le module en position opérante.

Dans un autre exemple de réalisation, lorsqu'une première unité d'émission optique 31 du premier réseau optique 30 comporte une source lumineuse 32 et une lentille 37, la deuxième unité de réception optique 45 du deuxième réseau optique 40 associée comporte un photorécepteur 46 et une lentille 47. Chaque lentille est préférentiellement disposée respectivement au niveau de la source lumineuse et du photorécepteur. Préférentiellement, de manière générale, aucune autre lentille n'est interposée entre une première unité d'émission optique 31 du premier réseau optique 30 et une deuxième unité de réception optique 45 du deuxième réseau optique 40 associée. Aucune lentille n'est interposée dans la distance d entre les premier et deuxième réseaux optiques 30, 40, lorsque le module en position opérante.

Dans une variante de réalisation, lorsqu'une première unité d'émission optique 31 et une première unité de réception optique 35 du premier réseau optique 30 comporte une fibre optique 34, 38, une seule fibre optique, par exemple la fibre 34 comme illustrée de manière non limitative sur la figure 8, peut être utilisée pour transporter de manière bidirectionnelle d'une part le faisceau optique de longueur d'onde λ₁ émis par la source lumineuse 32 de la première unité d'émission optique et d'autre part le faisceau optique de longueur d'onde λ₂ reçu par le photodétecteur 36 de la première unité de réception optique. Une première unité d'émission optique et une première unité de réception optique forme alors une première unité conjointe. Cette variante de réalisation s'applique de manière analogue à une deuxième unité d'émission optique et une deuxième unité de réception optique du deuxième réseau optique. Ainsi, par analogie, une deuxième unité d'émission optique et une deuxième unité de réception optique forme alors une deuxième unité conjointe. Une seule fibre optique, par exemple la fibre 44 comme illustrée de manière non limitative sur la figure 8, peut être utilisée pour transporter de manière bidirectionnelle d'une part le faisceau optique de longueur d'onde λ₂ émis par la source lumineuse 42 de la deuxième unité d'émission optique 41 et d'autre part le faisceau optique de longueur d'onde λ₁ reçu par le photodétecteur 46 de la deuxième unité de réception optique 45.

Dans une telle variante de réalisation, pour assurer la transmission bidirectionnelle des faisceaux optiques dans chaque fibre optique, une première unité conjointe et une deuxième unité conjointe comporte en outre, et de manière classique, un multiplexeur en longueur d'onde 61 ou encore un coupleur. Le multiplexeur en longueur d'onde 61, respectivement le coupleur, est disposé entre d'une part la fibre optique 34, 44 et d'autre part le photodétecteur 36, 46 et la source lumineuse 32, 42.

Les liaisons optiques établies entre la structure d'accueil 10 et un module 20 seront alors des liaisons dites bidirectionnelles.

De telles liaisons optiques, monodirectionnelles ou bidirectionnelles, permettent avantageusement de transporter tous type de signaux, notamment des signaux de données ou encore des signaux de puissance. Les diodes laser sont préférentiellement adaptées pour l'émission de signaux de données, les diodes électroluminescentes haute puissance pour les signaux de puissance.

Dans le cas des signaux de données, lorsqu'une première/deuxième unité d'émission optique, comportant une source lumineuse de type diode laser, reçoit, d'un équipement ou d'un autre module, un signal électrique entrant, elle émet un faisceau optique qui est fonction de ce signal électronique entrant. Lorsqu'un photodétecteur d'une deuxième/première unité de réception optique reçoit ledit faisceau optique, ledit photodétecteur le retransforme en un signal électrique.

Dans une forme de réalisation du premier réseau optique 30, non représentée sur les figures, ledit premier réseau optique peut se présenter sous la forme d'une ou plusieurs barrettes. Chaque barrette peut par exemple comporter une alternance de lignes ou de colonnes de sources lumineuses 32 et de photodétecteurs 36.

Chaque barrette peut ensuite être reliée, par exemple par soudage, à la première paroi de la structure d'accueil.

De manière analogue pour le deuxième réseau optique 40, la barrette peut par exemple comporter une alternance de lignes ou de colonnes de sources lumineuses 42 et de photodétecteurs 46. La barrette peut être reliée à la première face du module 20.

Dans un mode préféré de réalisation, pour se prémunir des dépôts de poussières sur les composants optiques formant les premières/deuxièmes unités d'émission optique 31, 41 et de réception optique 35/45, au niveau de l'interface optique, un joint de protection 70 peut être disposé autour de chaque première/deuxième unité d'émission optique et de réception optique, comme illustré de manière non limitative sur la figure 9. Lorsque le module 20 est en position opérante dans la structure d'accueil 10, chaque joint de protection 70 situé au niveau du premier réseau optique 30 est destiné à venir au contact d'un joint de protection 70 situé au niveau du deuxième réseau optique 40. Lesdits deux joints de protection 90 sont configurés pour s'ouvrir au contact l'un de l'autre, suite à une pression exercée sur eux, de sorte à laisser passer le faisceau optique émis d'une première unité d'émission optique 31 vers une deuxième unité de réception optique 45 ou à faire passer le faisceau optique émis d'une deuxième unité d'émission optique 41 vers une première unité de réception optique 35.

Dans une telle configuration, un tel joint de protection 70 permet également avantageusement de circonscrire le faisceau émis par la première unité d'émission optique 31, respectivement la deuxième unité d'émission optique, 41 vers la deuxième unité de réception optique associée 45, respectivement la première unité de réception optique 35. Il permet alors également d'augmenter la distance d entre le premier et le deuxième réseau optique 30, 40.

Dans une variante de réalisation, non représentée, un joint de protection 70 peut être disposé autour de l'ensemble des premières unités d'émission optique et de réception optique du premier réseau optique 30, respectivement l'ensemble des deuxièmes unités d'émission optique et de réception optique du deuxième réseau optique 40. Lorsque le module 20 en position opérante dans la structure d'accueil 10, le joint de protection 70 situé au niveau du premier réseau optique 30 est destiné à venir au contact du joint de protection 70 situé au niveau du deuxième réseau optique 40 et les deux joints de protection sont configurés pour s'ouvrir au contact l'un de l'autre de sorte à laisser passer l'ensemble des faisceaux optiques émis par les premières et les deuxièmes unités d'émission optique.

La description ci-avant illustre clairement que par ses différentes caractéristiques et leurs avantages, la présente invention atteint les objectifs qu'elle s'était fixé. En particulier, elle propose un ensemble qui permet de réaliser des interfaces optiques avec les modules, au niveau de toutes les parois de la structure d'accueil, et non plus uniquement au niveau du fond de panier. L'invention permet avantageusement de multiplier le nombre d'interfaces optiques dans un ensemble. De plus, l'invention permet de s'affranchir du positionnement de la structure d'accueil dans son environnement.

## Revendications

1. Ensemble (100) comportant un meuble avionique (10) et un module (20), ledit meuble avionique comportant une pluralité de logements (16), ledit module étant destiné à s'insérer dans un des logements (16) du meuble avionique (10) selon un axe longitudinal (X) et à y être maintenu fixement de manière réversible dans une position dite opérante, le module (20) comportant une première face (21, 22, 23, 24), destinée à être en vis-à-vis d'une première paroi (11, 13, 12, 14) du meuble avionique (10),
**caractérisé en ce que** pour chaque logement la première paroi (11,13, 12, 14) du meuble avionique (10) comporte un premier réseau optique (30) comportant des premières unités d'émission optique (31) et des premières unités de réception optique (35), **en ce que** la première face (21, 22, 23, 24) du module (20) comporte un deuxième réseau optique (40) comportant des deuxièmes unités d'émission optique (41) et des deuxièmes unités de réception optique (45) , et **en ce que** lorsque le module (20) est en position opérante dans le meuble avionique (10), le premier réseau optique (30) et le deuxième réseau optique (40) sont distants l'un de l'autre d'une distance (d) prédéfinie et, **en ce que** :
- chaque deuxième unité d'émission optique (41) de la première face (21, 22, 23, 24) du module (20) est disposée en vis-à-vis d'une première unité de réception optique (35) de la première paroi (11,13, 12, 14) du meuble avionique (10) pour assurer une liaison optique entre lesdites unités,
- chaque deuxième unité de réception optique (45) de la première face (21, 22, 23, 24) du module (20) est disposée en vis-à-vis d'une première unité d'émission optique (31) de la première paroi (11,13, 12, 14) du meuble avionique (10) pour assurer une liaison optique entre lesdites unités,

2. Ensemble (100) selon la revendication 1 dans lequel une première unité d'émission optique (31) et/ou une deuxième unité d'émission optique (41) comporte une source lumineuse (32, 42).

3. Ensemble (100) selon la revendication 1 dans lequel une première unité de réception optique (35) et/ou une deuxième unité de réception optique (45) comporte un photodétecteur (36, 46).

4. Ensemble (100) selon les revendications 2 et 3 dans lequel le premier réseau optique (30) se présente sous la forme d'une barrette comportant une alternance de lignes ou de colonnes de sources lumineuses (32) et de photodétecteurs (36).

5. Ensemble (100) selon l'une des revendications précédentes dans lequel une première unité d'émission optique (31) et/ou une deuxième unité d'émission optique (41) comporte une source lumineuse (32, 42) associée à une fibre optique (34, 44).

6. Ensemble (100) selon l'une des revendications précédentes dans lequel le premier réseau optique (30) comporte un joint de protection (70) disposé autour de chaque première unité d'émission optique (31) et chaque première unité de réception optique (35), dans lequel le deuxième réseau optique (40) comporte un joint de protection (70) disposé autour de chaque deuxième unité d'émission optique (41) et chaque deuxième unité de réception optique (45), et dans lequel, lorsque le module (20) est en position opérante dans le meuble avionique (10), chaque joint de protection (40) situé au niveau du premier réseau optique (30) est configuré pour s'ouvrir au contact d'un joint de protection (70) situé au niveau du deuxième réseau optique (40).

7. Aéronef comportant un ensemble (100) selon l'une des revendications 1 à 6, ledit ensemble étant destiné être intégré dans une baie avionique.

## Patentansprüche

1. Baugruppe (100) umfassend ein Avionikmöbel (10) und ein Modul (20), wobei das Avionikmöbel eine Vielzahl von Aufnahmen (16) umfasst, wobei das Modul in einer Längsachse (X) in eine der Aufnahmen (16) des Avionikmöbels (10) eingesetzt werden soll und dort reversibel in einer so genannten Betriebsstellung festgehalten werden, wobei das Modul (20) eine erste Seite (21, 22, 23, 24) umfasst, die einer ersten Wand (11, 13, 12, 14) des Avionikschranks (10) gegenüberliegt, **dadurch gekennzeichnet, dass** für jede Aufnahme
die erste Wand (11, 13, 12, 14) des Avionikschranks (10) ein erstes optisches Netz (30) umfasst, das erste optische Sendeeinheiten (31) und erste optische Empfangseinheiten (35) umfasst, wobei die erste Seite (21, 22, 23, 24) des Moduls (20) ein zweites optisches Netz (40) mit zweiten optischen Sendeeinheiten (41) und zweiten optischen Empfangseinheiten (45) umfasst, und dass, wenn sich das Modul (20) in der Betriebsposition im Avionikschrank (10) befindet, das erste optische Netz (30) und das zweite optische Netz (40) in einem vordefinierten Abstand (d) voneinander entfernt sind und, dass:
- jede zweite optische Sendeeinheit (41) der ersten Seite (21, 22, 23, 24) des Moduls (20) gegenüber einer ersten optischen Empfangseinheit (35) der ersten Wand (11, 13, 12, 14) des Avionikschranks (10) angeordnet ist, um eine optische Verbindung zwischen den Einheiten sicherzustellen,
- jede zweite optische Empfangseinheit (45) der ersten Seite (21, 22, 23, 24) des Moduls (20) gegenüber einer ersten optischen Sendeeinheit (31) der ersten Wand (11, 13, 12, 14) des Avionikschranks (10) angeordnet ist, um eine optische Verbindung zwischen den Einheiten sicherzustellen,

2. Baugruppe (100) nach Anspruch 1, wobei eine erste optische Sendeeinheit (31) und/oder eine zweite optische Sendeeinheit (41) eine Lichtquelle (32, 42) umfasst.

3. Baugruppe (100) nach Anspruch 1, wobei eine erste optische Empfangseinheit (35) und/oder eine zweite optische Empfangseinheit (45) einen Fotodetektor (36, 46) umfasst.

4. Baugruppe (100) nach den Ansprüchen 2 und 3, wobei das erste optische Netz (30) in Form einer Leiste umfassend einen Wechsel aus Linien oder Säulen aus Lichtquellen (32) und Fotodetektoren (36), vorliegt.

5. Baugruppe (100) nach einem der vorhergehenden Ansprüche, wobei eine erste optische Sendeeinheit (31) und/oder eine zweite optische Sendeeinheit (41) eine mit einer optischen Faser (34, 44) verbundene Lichtquelle (32, 42) umfasst.

6. Baugruppe (100) nach einem der vorhergehenden Ansprüche, wobei das erste optische Netz (30) eine um jede erste optische Sendeeinheit (31) und jede erste optische Empfangseinheit (35) angeordnete Schutzdichtung (70) aufweist, wobei das zweite optische Netz (40) eine um jede zweite optische Sendeeinheit (41) und jede zweite optische Empfangseinheit (45) angeordnete Schutzdichtung (70) umfasst, und wobei, wenn das Modul (20) sich in der Betriebsposition im Avionikschrank (10) befindet, jede Schutzdichtung (40), die sich auf Höhe des ersten optischen Netzes (30) befindet, so eingerichtet ist, dass sie sich bei Kontakt mit einer Schutzdichtung (70), die sich auf Höhe des zweiten optischen Netzes (40) befindet, öffnet.

7. Luftfahrzeug umfassend eine Baugruppe (100) nach einem der Ansprüche 1 bis 6, wobei die Baugruppe in einen Avionikschrank integriert werden soll.

## Claims

1. Assembly (100) including an avionics cabinet (10) and a module (20), said avionics cabinet having a plurality of slots (16), said module being intended to be inserted into one of the slots (16) of the avionics cabinet (10) according to a longitudinal axis (X) and to be reversibly held fixed therein in a so-called operative position, the module (20) including a first face (21, 22, 23, 24), intended to be opposite a first wall (11, 13, 12, 14) of the avionics cabinet (10),
**characterised in that**, for each slot, the first wall (11, 13, 12, 14) of the avionics cabinet (10) includes a first optical network (30) including first optical emitter units (31) and first optical receiver units (35), **in that** the first face (21, 22, 23, 24) of the module (20) includes a second optical network (40) including second optical emitter units (41) and second optical receiver units (45), and **in that** when the module (20) is in the operative position in the avionics cabinet (10), the first optical network (30) and the second optical network (40) are remote from each other by a predefined distance (d) and, **in that**:
- each second optical emitter unit (41) of the first face (21, 22, 23, 24) of the module (20) is disposed opposite a first optical receiver unit (35) of the first wall (11, 13, 12, 14) of the avionics cabinet (10) to ensure an optical link between said units,
- each second optical receiver unit (45) of the first face (21, 22, 23, 24) of the module (20) is disposed opposite a first optical emitter unit (31) of the first wall (11, 13, 12, 14) of the avionics cabinet (10) to ensure an optical link between said units.

2. Assembly (100) according to claim 1, wherein a first optical emitter unit (31) and/or a second optical emitter unit (41) includes a light source (32, 42).

3. Assembly (100) according to claim 1, wherein a first optical receiver unit (35) and/or a second optical receiver unit (45) includes a photodetector (36, 46).

4. Assembly (100) according to claims 2 and 3, wherein the first optical network (30) is in the form of a strip including an alternation of rows or columns of light sources (32) and photodetectors (36).

5. Assembly (100) according to one of the preceding claims, wherein a first optical emitter unit (31) and/or a second optical emitter unit (41) includes a light source (32, 42) associated with an optical fibre (34, 44).

6. Assembly (100) according to one of the preceding claims, wherein the first optical network (30) includes a protective seal (70) disposed around each first optical emitter unit (31) and each first optical receiver unit (35), wherein the second optical network (40) includes a protective seal (70) disposed around each second optical emitter unit (41) and each second optical receiver unit (45), and wherein, when the module (20) is in the operative position in the avionics cabinet (10), each protective seal (40) located at the first optical network (30) is configured to open in contact with a protective seal (70) located at the second optical network (40).

7. Aircraft including an assembly (100) according to one of claims 1 to 6, said assembly being intended to be integrated into an avionics bay.
